(19) Europäisches Patentamt
European Patent Office
Office européen des brevets

(11) **EP 2 899 018 B1**

(12) **EUROPEAN PATENT SPECIFICATION**

(45) Date of publication and mention of the grant of the patent:
**30.08.2017 Bulletin 2017/35**

(21) Application number: **14820724.4**

(22) Date of filing: **01.07.2014**

(51) Int Cl.:
**B32B 5/26** (2006.01)       **B32B 5/10** (2006.01)
**B32B 7/12** (2006.01)       **B32B 7/14** (2006.01)
**D06M 17/08** (2006.01)

(86) International application number:
**PCT/JP2014/067492**

(87) International publication number:
**WO 2015/072172 (21.05.2015 Gazette 2015/20)**

(54) **THERMOPLASTIC RESIN REINFORCING SHEET MATERIAL AND MANUFACTURING PROCESS THEREFOR**

DURCH EIN THERMOPLASTISCHES HARZ VERSTÄRKTES FOLIENMATERIAL UND VERFAHREN ZU SEINER HERSTELLUNG

MATÉRIAU DE FEUILLE DE RENFORT EN RÉSINE THERMOPLASTIQUE ET PROCÉDÉ DE FABRICATION POUR CE DERNIER

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.11.2013 JP 2013236403**
**08.04.2014 JP 2014079179**

(43) Date of publication of application:
**29.07.2015 Bulletin 2015/31**

(73) Proprietors:
• **Hatta Tateami Co., Ltd.**
**Sabae-shi, Fukui 916-0033 (JP)**
• **Toyo Senko & Co., Ltd.**
**Sakai-shi, Fukui 919-0477 (JP)**
• **Fukui Prefectural Government**
**Fukui-shi**
**Fukui 910-8580 (JP)**

(72) Inventors:
• **YAMAZAKI, Hiromi**
**Sabae-shi, Fukui,**
**9160033 (JP)**

• **IHARA, Makoto**
**Sakai-shi, Fukui 9190477 (JP)**
• **YAMAMOTO, Masao**
**Sakai-shi, Fukui 9190477 (JP)**
• **YOSHIMURA, Daizo**
**Sakai-shi, Fukui 9190477 (JP)**
• **KAWABE, Kazumasa**
**Fukui-chi, Fukui 9100102 (JP)**
• **SASAYAMA, Hideki**
**Fukui-chi, Fukui 9100102 (JP)**

(74) Representative: **Lamb, Martin John Carstairs**
**Marks & Clerk LLP**
**90 Long Acre**
**London WC2E 9RA (GB)**

(56) References cited:
**WO-A2-2006/124995       JP-A- H06 322 160**
**JP-A- 2007 182 661       JP-A- 2008 221 833**
**JP-A- 2012 236 897       US-A- 5 520 995**
**US-A1- 2010 215 887**

## Description

Technical Field

The present invention relates to a sheet material suitable for obtaining a thermoplastic resin composite material molded article having a three-dimensional shape, and more particularly relates to a thermoplastic resin reinforced sheet material in which a fabric formed of a thermoplastic resin material is caused to adhere to a reinforced fiber sheet material formed by drawing and aligning a reinforcing fiber such as a carbon fiber into the shape of a sheet and a method for manufacturing the same.

Background Art

A fiber reinforced composite material is a material which is obtained by combining a fiber material and a matrix material, which is lightweight and rigid, and which can be designed so as to have various functions, and is used in a wide range of fields such as an aerospace field, a transport field, a civil engineering and construction field and an exercise equipment field. Today, a fiber reinforced plastic material obtained by combining a reinforcing fiber material such as a carbon fiber or a glass fiber with a thermosetting resin material is mainly used. However, it is considered that, from the viewpoint of enhancement and the like of recyclability, short time moldability, impact resistance characteristics of a molded article, the development of a molded article using a thermoplastic resin material as a matrix material will be increased in the future.

On the other hand, attention is focused on a molded article and a molding method in which, in order to easily perform molding and reduce a molding cost in obtaining a molded article, a multiaxial reinforced sheet material stacked such that the direction of the reinforcement of a reinforcing fiber material is multiaxial. Therefore, there are expected a sheet material obtained by combining a reinforced fiber material and a thermoplastic resin material, in particular, a sheet material obtained by combining a multiaxial reinforced sheet material in which a reinforced fiber material is stacked so as to be multiaxial and a thermoplastic resin material, and the manufacturing of a molded article having a high quality in a short time and at a low cost, by using such a sheet material.

As the sheet material obtained by combining a reinforced fiber material and a thermoplastic resin material, for example, Patent Literature 1 discloses a prepreg ribbon obtained by stacking the tow of a ribbon-shaped reinforcing fiber and a ribbon-shaped matrix resin layer having the same width as the tow and by joining them with a joint portion. The matrix resin layer is a ribbon-shaped layer formed of a resin serving as a matrix in a fiber reinforced thermoplastic resin material product, and examples of its form include a non-woven fabric, a woven fabric and a fiber bundle. Furthermore, Patent Literature 2 discloses that a thermoplastic resin multilayer reinforced sheet material is obtained by causing a thermoplastic resin reinforced sheet material to adhere to one surface of a reinforced fiber sheet material obtained by drawing and aligning, in a width direction, a plurality of reinforcing fiber bundles in which a plurality of reinforcing fibers is bundled with a sizing agent or the like into the form of a sheet through the use of a thermoplastic resin material for bonding that is molten or softened at a temperature lower than the melting temperature of the thermoplastic resin sheet material, by stacking the thermoplastic resin reinforced sheet material to thereby bond and integrate the layers of the thermoplastic resin reinforced sheet material through the use of the thermoplastic resin material for bonding.

Citation List

Patent Literature

PTL 1: Japanese Patent Laid-Open No. 6-322160
PTL 2: Japanese Patent Laid-Open No. 2008-221833 Reference is also made to US 2010/215887 which dicloses a thermoplastic resin reinforced sheet material according to the preamble of Claim 1 and a method according to the preamble of Claim 7, and to US 5520995.

Summary of Invention

Technical Problem

The patent literatures described above disclose that the thermoplastic resin reinforced sheet material is constituted by stacking the reinforced fiber material and the thermoplastic resin sheet material. The reinforced fiber material is used by performing opening processing on the reinforcing fiber such as a carbon fiber to thereby form the fiber into the shape of a sheet, but due to the progress of opening processing technology, it becomes possible to form the opened sheet material so as to have a uniform and wide width and make its thickness equal to or less than ten times the diameter of a single yarn of the reinforcing fiber. For example, when the diameter of the single yarn of the reinforcing fiber is 0.005 to 0.007 mm, the thickness of the reinforced fiber sheet material is equal to or less than 0.05 to 0.07 mm. Therefore, it is required that a thermoplastic resin reinforced sheet material is manufactured through the use of a reinforced fiber sheet material formed to be thin and wide.

Although when a composite material molded article is manufactured, a fiber volume content (hereinafter referred to as a "Vf value" in short) is set, since the basis weight per unit area (fiber weight per unit area) is low in the above-described reinforced fiber sheet material formed to be thin and wide, it is necessary to lower the weight of the thermoplastic resin sheet material per unit area in response to the reinforced fiber sheet material in order to set a predetermined Vf value. Therefore, although it is considered that the thermoplastic resin sheet material is formed to be thin and wide as the thickness of the reinforced fiber sheet material becomes smaller, it is difficult to mass-produce the thermoplastic resin sheet material so as to be formed to be equal to or less than 0.1 mm, and to be uniform, wide and thin.

When the thermoplastic resin sheet material is caused to adhere to one surface of the reinforced fiber sheet material formed to be thin and wide, the thermoplastic resin sheet material easily expands and contracts although the reinforced fiber sheet material little expands and contracts, and thus the obtained thermoplastic resin sheet material is curled, with the result that it is difficult to carry out handling.

Hence, an object of the present invention is to provide a thermoplastic resin reinforced sheet material that easily corresponds to the Vf value and that is free from curling, and a method for manufacturing such a thermoplastic resin reinforced sheet material.

Solution to Problem

A thermoplastic resin reinforced sheet material according to the present invention includes: a reinforced fiber sheet material which is formed into a sheet shape by drawing and aligning a plurality of reinforcing fibers in a predetermined direction and whose basis weight per unit area is 80 g/m$^2$ or less; a fabric which is formed of a thermoplastic resin fiber material having a fineness of 5.6 decitex to 84 decitex and whose weight per unit area is 5 g/m$^2$ to 90 g/m$^2$; and a thermoplastic resin material for bonding which is melted or softened at a temperature lower than a melting temperature of the fabric and which discretely causes the reinforced fiber sheet material and the fabric to adhere. Furthermore, the fabric has a pore volume rate of 50 % or more. In addition, the fabric is a knitted fabric. Furthermore, the cross-sectional thickness of the reinforced fiber sheet material is set to be within 10 times a diameter of the reinforcing fiber. Moreover, the adhesion amount of the thermoplastic resin material for bonding is 1 g/m$^2$ to 10 g/m$^2$ per unit area of the fabric. In addition, the thermoplastic resin multilayer reinforced sheet material is formed and integrated by stacking a plurality of sheets of the thermoplastic resin reinforced sheet material. Furthermore, the thermoplastic resin reinforced sheet material is stacked such that each direction in which the reinforced fiber sheet material is drawn and aligned is multiaxial.

A method for manufacturing a thermoplastic resin reinforced sheet material according to the present invention includes: a temporary bonding step of heating a fabric which is formed of a thermoplastic resin fiber material having a fineness of 5.6 decitex to 84 decitex and whose weight per unit area is 5 g/m$^2$ to 90 g/m$^2$ and of discretely and temporarily bonding, to a surface of the fabric, a powder-shaped thermoplastic resin material for bonding which is melted or softened at a temperature lower than a melting temperature of the fabric; and an adherence step of causing the reinforced fiber sheet material and the fabric to adhere by bringing a reinforced fiber sheet material formed into a sheet shape through drawing and aligning a plurality of reinforcing fibers in a predetermined direction, into contact with the fabric and by melting the thermoplastic resin material for bonding heated and temporarily bonded at the lower temperature than the melting temperature of the fabric. Furthermore, in the temporary bonding step, 1 g/m$^2$ to 10 g/m$^2$ of the thermoplastic resin material for bonding is caused to adhere per unit area of the fabric. Further, the fabric has a pore volume rate of 50 % or more

Advantageous Effects of Invention

In the present invention, through the use of the fabric of the thermoplastic resin fiber material, it is possible to form the thermoplastic resin fiber material so as to be wide and thin according to the reinforced fiber sheet material and to achieve the reduction in the weight of the thermoplastic resin material, with the result that, even when using the reinforced fiber sheet material formed to be thin and wide, it becomes possible to easily correspond to a Vf value. Furthermore, since the reinforced fiber sheet material adheres to the fabric that is flexible enough to be easily subjected to elastic deformation and bending deformation, the sheet material is maintained in a thin and wide form and in a state where straightness is kept and it is possible to obtain the thermoplastic resin reinforced sheet material free from deformation such as curl.

Furthermore, through the use of the fabric which is formed of the thermoplastic resin fiber material having a fineness of 5.6 decitex to 84 decitex and whose weight per unit area is 5 $g/m^2$ to 90 $g/m^2$, it is possible to obtain a thin fabric having a large number of voids, and when stacking the thermoplastic resin reinforced sheet material to thereby form a molded article, it becomes possible to easily remove the air therewithin through the fabric, with the result that it is possible to manufacture a molded article having almost no voids.

Brief Description of Drawings

[Fig. 1] A plan view showing part of a thermoplastic resin reinforced sheet material according to an embodiment of the present invention;
[Fig. 2] A schematic cross-sectional view obtained by cutting a fabric along a weft direction of the fabric; and
[Fig. 3A and 3B] An illustrative diagram concerning a process of manufacturing the thermoplastic resin reinforced sheet material.

Description of Embodiments

An embodiment according to the present invention will be described in detail below. Although since the embodiment to be described below is a preferred specific example to practice the present invention, various technical limitations are provided, the present invention is not limited to these forms unless otherwise particularly stated in the following description that the present invention is limited.

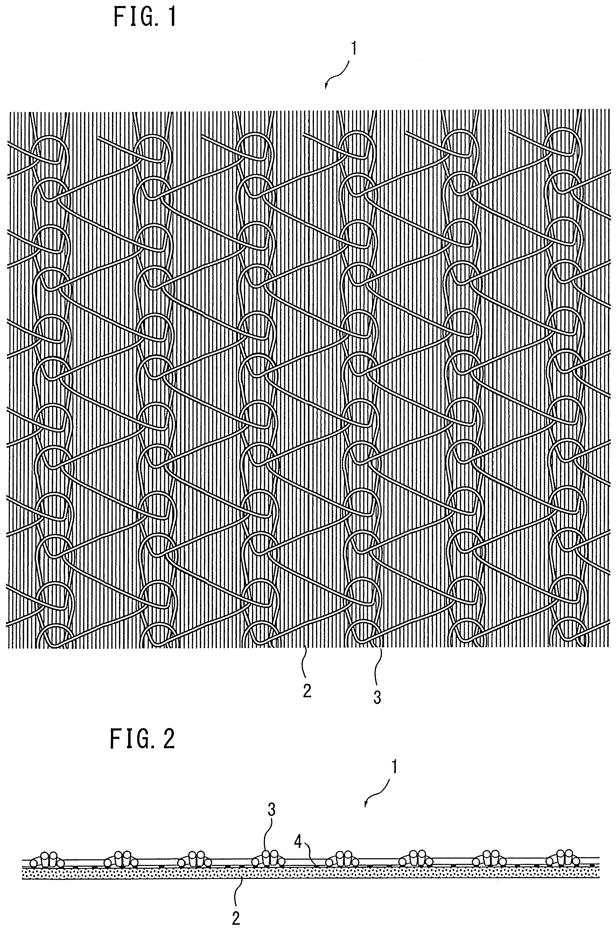

Fig. 1 is a plan view showing part of a thermoplastic resin reinforced sheet material according to the embodiment of the present invention. The thermoplastic resin reinforced sheet material 1 is constituted by causing a fabric 3 formed of a thermoplastic resin fiber material to adhere to one surface of a reinforced fiber sheet material 2 obtained by drawing and aligning, in a width direction, reinforcing fiber bundles in which a plurality of reinforcing fibers is bundled with a sizing agent or the like, into the form of a sheet. In this example, the fabric 3 is knitted with denbigh stitches, and Fig. 2 is a schematic cross-sectional view obtained by cutting the fabric 3 along a weft direction. The fabric 3 is constituted by being caused to adhere to the reinforced fiber sheet material 2 with a thermoplastic resin material for bonding 4 that is melt or softened at a temperature lower than the melting temperature of the thermoplastic resin fiber material constituting the fabric 3. Note that the fabric 3 may be caused to adhere to both surfaces of the reinforced fiber sheet material 2. Furthermore, the fabric 3 may be constituted such that the reinforced fiber sheet material 2 may adhere to both surfaces of the fabric 3.

In Fig. 1, the reinforced fiber sheet material 2 and the fabric 3 are bonded with the thermoplastic resin material for bonding 4, and are integrated so as not to be separated from each other, and thus the reinforced fiber sheet material 2 and the fabric 3 adhere to each other. Namely, since the reinforced fiber sheet material 2 and the fabric 3 adhere to each other without heating the fabric 3 up to the melting temperature, the form of the reinforced fiber sheet material 2 and the form of the fabric 3 are maintained.

Through the use of the fabric 3 having a large number of voids and having a low basis weight per unit area, it is possible to achieve the reduction in the amount of the thermoplastic resin material corresponding to the reinforced fiber sheet material which is thin and whose weight per unit area is low in accordance with the Vf value of the thermoplastic resin reinforced sheet material. Then, the thermoplastic resin material for bonding 4 is discretely distributed on the fabric 3 having a large number of voids, and thus it becomes possible to suppress the adhesion amount of thermoplastic resin material for bonding 4, and the total amount of thermoplastic resin material is further reduced, with the result that it is possible to easily correspond to a high Vf value.

Since in the case of the fabric having a large number of voids, the thermoplastic resin fiber material is uniformly distributed both in the warp direction and in the weft direction, the thermoplastic resin fiber material and the reinforced fiber sheet material 2 are bonded with the thermoplastic resin material for bonding 4, and thus it is possible to stably maintain the form of the sheet without the reinforced fiber sheet material 2 being separated. Then, since the fabric 3 can be flexibly deformed according to elastic deformation and bending deformation, and a curl or the like hardly occurs, it is possible to enhance handling characteristics while maintaining the form of the sheet. Therefore, it is possible to obtain the thermoplastic resin reinforced sheet material that is excellent in the drape property of the thermoplastic resin reinforced sheet material, the straight state and the uniformly dispersed state of the reinforcing fiber, and the like.

As in the case of the knitted fabric described above, when the fabric used in the present invention is a material which has a large number of voids, which is capable of achieving low basis weight per unit area and which is so flexible as not to produce a curl or the like, the fabric can be used. For example, a woven fabric can also be used.

The size of the void in the fabric is calculated from a pore volume rate. The pore volume rate can be obtained by formula below from the basis weight per unit area $Ag/m^2$ and the thickness T mm of the fabric and the specific gravity M of the thermoplastic resin fiber material constituting the fabric. Note that the basis weight per unit area and the thickness of the fabric may be measured based on JIS L 1096 (2010).

$$\text{Pore volume rate } P = (M - B) / M \times 100 \, (\%)$$

B:

$$\text{Apparent specific gravity} = A/ (1000 \times T)$$

The pore volume rate is set to be 50% or more, and is more preferably set to be 80% or more. Through the use of the fabric having a large number of voids as described above, it is possible to efficiently discharge air by exhausting the air within the sheet material through the voids of the fabric in impregnating the reinforced fiber sheet material with the thermoplastic resin material, with the result that it becomes possible to reduce the generation of voids. The voids formed in the fabric are preferably distributed as uniformly as possible, and it becomes possible to obtain the fabric in which the voids are uniformly distributed by controllering the distribution of the voids in the fabric through a weaving structure or a knitting structure. Furthermore, since the weaving structure has elasticity, the weaving structure can expand and contract in a state of holding the voids in accordance with the shape when the thermoplastic resin reinforced sheet material is formed three-dimensionally. In particular, in a state where the fabric is partially bonded to the reinforced fiber sheet material by the thermoplastic resin material for bonding, the elasticity of the weaving structure is ensured, and thus it becomes possible to easily perform the molding of various three-dimensional shapes.

As the fabric in which the voids are uniformly distributed, the following can be included in the case of, for example, knitted fabrics.

(Knitted fabric 1) In a knitted fabric (basis weight per unit area 17.6 g/m$^2$ and thickness 0.21 mm) knitted with chain stitches + half stitches (thread array Ox; 1 in 1 out) using threads (specific gravity 1.14; 20 decitex/1f) formed of nylon 6, the pore volume rate is about 92.7%.

(Knitted fabric 2) In a knitted fabric (basis weight per unit area 18.0 g/m$^2$ and thickness 0.22 mm) knitted with denbigh stitches + chain stitches + insertion stitches (thread array all in) using threads (specific gravity 1.14; 20 decitex/1f) formed of nylon 6, the pore volume rate is about 92.8%.

(Knitted fabric 3) In a knitted fabric (basis weight per unit area 19.8 g/m$^2$ and thickness 0.27 mm) knitted with chain stitches + 1 $\times$ 4 satin (thread array ©$\times\times\times$; ©including two) using threads (specific gravity 1.14; 20 decitex/1f) formed of nylon 6, the pore volume rate is about 93.6%.

(Knitted fabric 4) In a knitted fabric (basis weight per unit area 50.9 g/m$^2$ and thickness 0.23 mm) knitted with denbigh stitches + satin (thread array all in) using threads (specific gravity 1.14; 20 decitex/1f) formed of nylon 6, the pore volume rate is about 80.6%.

Furthermore, the following can be included in the case of woven fabrics.

(Woven fabric 1) In a woven fabric (basis weight per unit area 16.5 g/m$^2$ and thickness 0.18 mm) knitted with flat stitches using threads (specific gravity 1.14; 10 decitex/5f) formed of nylon 66, the pore volume rate is about 92.0%.

(Woven fabric 2) In a woven fabric (basis weight per unit area 26.25 g/m$^2$ and thickness 0. 27 mm) knitted with flat stitches using threads (specific gravity 1.14; 15 decitex/5f) formed of nylon 66, the pore volume rate is about 91.5%.

When a thermoplastic resin multilayer reinforced sheet material is formed, it can be formed by stacking the thermoplastic resin reinforced sheet material. When the thermoplastic resin reinforced sheet material is stacked, the strength of the sheet material can have pseudo-isotropy by stacking the sheet material such that the direction in which the fibers of the reinforced fiber sheet material are drawn and aligned is multiaxial. When a plurality of sheets of the thermoplastic resin reinforced sheet material is stacked and integrated, the thermoplastic resin reinforced sheet material is heated at a temperature lower than the melting temperature of the fabric in a state where the sheets of the thermoplastic resin reinforced sheet material stacked are being in close contact, the thermoplastic resin material for bonding is melted and oozed to the adjacent thermoplastic resin reinforced sheet material to perform bonding, with the result that it is possible to easily integrate the sheets. Since the voids are formed in the fabric, the molten thermoplastic resin material for bonding easily flows to the adjacent thermoplastic resin reinforced sheet material, and thus it is possible to efficiently manufacture the thermoplastic resin multilayer reinforced sheet material. Furthermore, except the integration method described above, it is also possible to perform the integration by thermally fusing the fabric between the adjacent sheets of the thermoplastic resin reinforced sheet material or by performing sewing with an integration thermoplastic resin fiber bundle having the same material as the fabric.

Moreover, the above-described thermoplastic resin reinforced sheet material to which the fabric having a large number of voids is caused to adhere is also suitable as a material used for a vacuum resin impregnation manufacturing method (VaRTM method). For example, in a thermoplastic resin reinforced sheet material to which a warp knitted fabric is caused to adhere, a gap between stitch columns in a warp direction serves as the flow path of an impregnating liquid resin material, and thus the liquid resin material can be impregnated uniformly over the entire sheet material. Then, since the fabric and the reinforcing fiber are bonded with a bonding resin material, when the liquid resin material flows, the fiber orientation comes to be maintained without meandering of the reinforcing fiber.

In addition, when a fiber base material and the thermoplastic resin reinforced sheet material are combined and molded by the VaRTM method, the thermoplastic resin material of the thermoplastic resin reinforced sheet material forms a thin thermoplastic resin layer between the layers to thereby serve as an interlayer reinforcing material, with the result that the impact resistance can be expected to be enhanced.

The reinforced fiber sheet material is formed by, for example, drawing and aligning, into the form of a sheet, a plurality of reinforcing fiber bundles where a plurality of reinforcing fibers is bundled with a sizing agent or the like so as not to be separated. Examples of the reinforcing fiber include inorganic fibers and organic fibers used in FRPs and having a high strength and a high elastic modulus, such as a carbon fiber, a glass fiber, a ceramic fiber, a Basalt fiber, an aramid fiber, a PBO (polyparaphenylene benzobisoxazole) fiber and a metal fiber. In addition, a plurality of fiber bundles in which these fibers is bundled may be combined. Although the fineness of the reinforced fiber sheet material is not particularly limited, the basis weight per unit area is preferably 80 $g/m^2$ or less, more preferably 20 to 50 $g/m^2$. As described above, the basis weight per unit area of the reinforced fiber sheet material is suppressed low, and thus it is possible not only to enhance the drape property of the thermoplastic resin reinforced sheet material but also to uniformly impregnate, when the fabric is melted, the fabric into the reinforced fiber sheet material.

The distance over which the fabric flows due to the impregnation between the reinforcing fibers becomes shorter in forming a molded article, by setting the thickness of the reinforced fiber sheet material to be within 10 times the diameter of the reinforcing fiber. Since the diameter of a single yarn of the carbon fiber that is typical as a reinforcing fiber for a composite material is 0.005 to 0.007 mm, the thickness of the reinforced fiber sheet material is 0. 05 to 0. 07 mm or less.

In such a reinforced fiber sheet material that is formed to be thin, it is expected that the fabric is impregnated into the reinforcing fiber bundle for about a few seconds when the fabric is heated and melted, and thus short-time molding processing can be realized. Furthermore, since, when the thermoplastic resin material in which the fabric is melted is impregnated between the reinforcing fibers, the distance over which the resin material flows can be reduced, it is possible to obtain a state where the orientation disturbance of the reinforcing fiber caused by the flow of the resin is suppressed, the uniform dispersibility of the reinforcing fiber is enhanced and a small number of voids are present. In the fabric in which the pore volume rate is high and the basis weight per unit area is low, although the thermoplastic resin material is not uniformly and continuously distributed as with the film, it is distributed as a whole discretely and uniformly, and thus the distance over which the fabric melted and extended between the reinforcing fibers flows becomes short, with the result that the orientation disturbance of the reinforcing fiber caused by the flow of the resin comes to be suppressed.

There is a method for using a fiber bundle where a small number of bundles are present or a method for opening a fiber bundle, in order to put the thickness of the reinforced fiber sheet material 2 into a state of being ten times or less the diameter of the reinforcing fiber. By the opening method, it is possible to put a fiber bundle (large fineness fiber bundle) having a large number of bundles into a state of being wide and thin. Since the material cost of the large fineness fiber bundle is relatively inexpensive, a low cost molded article can be obtained. Note that the form of the opened yarn is stabilized by the effect of the sizing agent or the like used in a state of original yarn.

The thermoplastic resin fiber material constituting the fabric 3 serves as a base material (matrix) resin, and a material obtained by spinning the thermoplastic resin material into the form of a fiber can be used. Examples of the thermoplastic resin material include polypropylene, polyethylene, polystyrene, polyamides (such as nylon 6, nylon 66 and nylon 12), polyacetal, polycarbonate, acrylonitrile-butadiene-styrene copolymer (ABS), polyethylene terephthalate, polybutylene terephthalate, polyetherimide, polyethersulfone, polyphenylene sulfide (PPS), polyphenylene sulfide, polyether ketone, polyether etherketone and the like. In addition, two or more types of these thermoplastic resins may be used as the base material (matrix) resin by mixing them and forming them into a polymer alloy. The yarn of a known form such as a monofilament, a multifilament or a spun yarn can be used for the thermoplastic resin fiber material, and when the thermoplastic resin fiber material is used in the form of a multifilament, the melting rate when the fabric is melted can be increased. The fineness of the thermoplastic resin fiber material is preferably 5.6 decitex to 84 decitex. Through the use of the thermoplastic resin fiber material having such a low fineness, it becomes possible to easily form the fabric having a large number of voids and having a low basis weight per unit area, and by achieving the reduction in the amount of the thermoplastic resin material, it becomes possible to easily performs an adjustment associated with the Vf value. Furthermore, through the use of the thermoplastic resin fiber material having a low fineness, it is possible to finely divide the voids formed in the fabric, with the result that it becomes possible to more uniformly disperse the thermoplastic resin fiber material and to enhance the bonding property of the reinforced fiber sheet material to the reinforcing fiber.

The basis weight per unit area (the weight of the fiber per unit area) of the fabric 3 is determined by being associated with the basis weight per unit area of the reinforced fiber sheet material and the Vf value of the molded article. The basis weight per unit area of the fabric can easily be adjusted by the fineness, the structure and the like of the thermoplastic resin fiber material to be used. However, in order to prevent the occurrence of the orientation disturbance of the reinforcing fiber at the time of the flow between the reinforcing fibers, it becomes necessary to suppress the amount of resin flowing.

When the Vf value is set to be 30% to 70% through the use of a thin reinforced fiber sheet material having a basis weight per unit area of 20 g/m$^2$ to 50 g/m$^2$, the basis weight per unit area of the fabric is preferably set to be 5 g/m$^2$ to 90 g/m$^2$. For example, when the Vf value is set to be 60% through the use of a thin reinforced fiber sheet material having a basis weight per unit area of 20 g/m$^2$ to 40 g/m$^2$, the basis weight per unit area of the fabric is set as low as 8 g/m$^2$ to 20 g/m$^2$.

In order to realize such a fabric having a low basis weight per unit area, it is possible to use a thin knitted fabric having a large number of voids. In such a thin knitted fabric having a low weight per unit area, warp stiches that hold the form in which voids are uniformly dispersed are preferable. Through the use of chain stitches as a part of a knitted structure constituting the warp stiches, it is possible to prevent the generation of a curl without producing easily misalignment, and to obtain a knitted fabric having a stable form suitable for the fabric according to the present invention. A woven fabric such as plain weave or leno weave whose pore volume rate can be set to be 50% or more can be used in the case of the woven fabric.

Through the use of a plurality of different types of thermoplastic resin fabric materials as the thermoplastic resin fabric material forming the fabric, it is possible to constitute the fabric by thermoplastic resin materials of different properties, with the result that it becomes possible to obtain thermoplastic resin reinforced sheet materials of various properties. Furthermore, through the use as the thermoplastic resin fabric material constituting the fabric 3 of a material obtained by combining a thermoplastic resin having a high melting point in a core portion and a thermoplastic resin having a low melting point in a sheath portion, it is possible to bond the thermoplastic resin fabric material to the reinforced fiber sheet material without using a thermoplastic resin material for bonding while holding the form of the fabric 3.

As the thermoplastic resin material for bonding 4, there is used a thermoplastic resin material that bonds the fabric 3 to the reinforced fiber sheet material 2 to thereby integrate them, that is melted or softened at a temperature lower than the melting point of the fabric 3, and that can bond the reinforced fiber sheet material 2 and the fabric 3. Preferably, the thermoplastic resin material for bonding 4 is temporarily bonded to one surface of the fabric 3, and is made discrete uniformly. In this way, it is possible to reliably bond the reinforced fiber sheet material 2 and the fabric 3 to thereby put the fabric 3 in a state of adhering to the reinforced fiber sheet material 2.

As the thermoplastic resin material for bonding 4, any of a powder shape, a short fiber shape and a perforated film shape (cobweb shape) may be used, and the thermoplastic resin material for bonding 4 is not particularly limited as long as it can be discretely and uniformly distributed on the one surface of the fabric 3 and can be temporarily bonded.

Furthermore, as the thermoplastic resin material for bonding 4, a resin whose melting point falls within a range of 60 to 250°C is preferable, and for example, a polyolefin-based resin such as polyethylene, a polyester-based resin, a polyamide, a copolymerization polyamide, a polyurethane or the like is selected. In particular, since a copolymerization polyamide has a low melting point and a satisfactory bonding property to the fabric 3 serving as the base material, it is preferably used as the thermoplastic resin material for bonding 4. Moreover, as the thermoplastic resin material for bonding 4, a material having satisfactory compatibility with the fabric 3 constituted thereof is preferably selected. In this way, when the thermoplastic resin material for bonding is melted in the thermoplastic resin material serving as the base material, the thermoplastic resin material for bonding can be present so as to satisfactorily fit in the thermoplastic resin material serving as the base material.

The adhesion amount of the thermoplastic resin material for bonding 4 is preferably set to be 1 g/m$^2$ to 10 g/m$^2$ per unit area of the fabric 3, and even in such a small adhesion amount of the thermoplastic resin material for bonding 4, it is possible to increase a bonding force by distributing the resin material discretely in the form of a dot as compared with a case where the resin material is distributed as a whole thinly and uniformly. In addition, by reduction in the use amount of thermoplastic resin material for bonding 4, it is possible to reduce effects given by the thermoplastic resin material for bonding 4 on the mechanical properties and the thermal properties of the obtained composite material molded article.

The thermoplastic resin material for bonding 4 is preferably discretely and uniformly distributed on one surface of the fabric 3, and the discretely distributed thermoplastic resin material for bonding 4 is more preferably uniform. In this way, even with a small adhesion amount of thermoplastic resin material for bonding 4, it is possible to cause the reinforced fiber sheet material 2 and the fabric 3 to uniformly adhere with an overall equal bonding force. Since the fabric 3 is bonded to the reinforcing fiber uniformly in a warp direction and a weft direction by adhesion of the fabric 3 to the reinforced fiber sheet material 2 even when a large number of voids are present in the fabric 3, it is possible to maintain the form of each fiber bundle constituting the reinforced fiber sheet material 2, that is, a state where the reinforcing fibers are drawn and aligned straightly, a state where the reinforcing fibers are uniformly dispersed, and the like.

Furthermore, through the use of the fabric of the thermoplastic resin fiber material, the fabric can easily be formed to be wide and thin according to the reinforced fiber sheet material, and the weight of the thermoplastic resin material can be reduced. Moreover, since the reinforced fiber sheet material adheres to the fabric that is easily subjected to elastic deformation and bending deformation, the reinforced fiber sheet material is maintained in a thin and wide form and in a state where straightness is kept, the form of a flat sheet without any deformation such as a curl is maintained and it is possible to obtain the thermoplastic resin reinforced sheet material excellent in handling characteristics.

In addition, since it is possible to easily set the basis weight per unit area of the fabric so as to be associated with a Vf value to be set as the basis weight per unit area of the reinforced fiber sheet material and the molded article, it is possible to obtain the thermoplastic resin reinforced sheet material having a high Vf value even in the case of a thin and wide reinforced fiber sheet material.

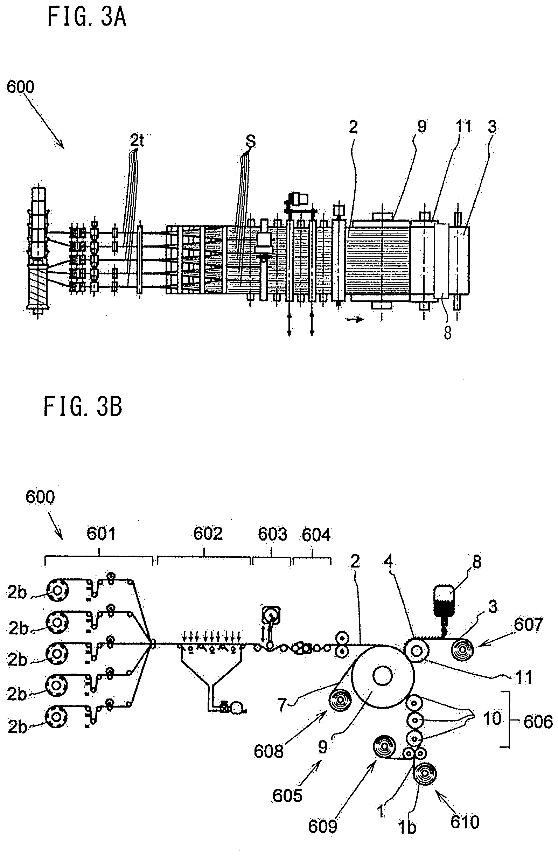

Fig. 3A and 3B is an illustrative diagram concerning a process of manufacturing the thermoplastic resin reinforced sheet material. Fig. 3A and 3B is the illustrative diagram concerning the process of manufacturing the thermoplastic resin reinforced sheet material 1 as follow: the reinforced fiber sheet material 2 in which reinforcing-fiber opened yarns S in which reinforcing fiber bundles 2t are opened are drawn and aligned in a width direction is formed, the powder-shaped thermoplastic resin material for bonding 4 is distributed on one surface of the fabric 3 and is temporarily bonded, the temporarily bonded one surface of the fabric 3 is brought into contact with the one surface of the reinforced fiber sheet material 2 and is bonded with the thermoplastic resin material for bonding 4. Note that Fig. 3A is a top view and Fig. 3B is a front view.

A thermoplastic resin reinforced fiber sheet material manufacturing device 600 of Fig. 3A and 3B is constituted of a multiple-fabric-bundle supply mechanism 601, a multiple-fabric-bundle opening mechanism 602, a vertical-direction-vibration provision mechanism 603, a width-direction-vibration provision mechanism provision mechanism 604, a heating mechanism 605, a cooling mechanism 606, a fabric supply mechanism 607, a mold-release-sheet-material supply mechanism 608, a mold-release-sheet-material winding mechanism 609 and a reinforced fiber sheet material winding mechanism 610.

It is possible to feed out each of the reinforcing fiber bundles 2t by a substantially constant tension, by installing a plurality of reinforcing fiber bundle bobbins 2b around which the reinforcing fiber bundles are wound, through the use of the multiple-fabric-bundle supply mechanism 601.

The supplied reinforcing fiber bundles 2t are opened in a state of being wide and thin by the multiple-fabric-bundle opening mechanism 602. The present opening mechanism adopts an air opening method for using a wind tunnel tube to thereby make a liquid (suction air current in Fig. 3A and 3B) flowing from one direction act on each fiber bundle, that is, a known technology disclosed in Japanese Unexamined Patent Application Publication (Translation of PCT Application) No. 2007-518890. Note that, as long as the method is to open each of the reinforcing fiber bundles 2t, any opening method may be adopted.

Within the wind tunnel tube, two or more or a plurality of fixed or rotating rollers are installed at certain intervals, and the individual reinforcing fiber bundles 2t travel in contact with the upper portion, the lower portion, the upper portion, the lower portion, ... and the upper portion of the installed rollers. Since each of the reinforcing fiber bundles 2t is alternately brought into a tension statue a relaxed state a tension state a relaxed state ... by the vertical-direction-vibration provision mechanism 603, the reinforcing fiber bundle 2t which travels in the lower portion of the roller is instantaneously bent in the direction in which the air flows when the reinforcing fiber bundles 2t are put into the relaxed state within the wind tunnel tube, and the respective fibers are moved in the width direction, with the result that the opening is performed. Then, when the reinforcing fiber bundles 2t are put into the tension state, the fibers are made straight with the opened width being maintained since the reinforcing fiber bundles 2t travel while being pressed in contact with the upper portion and the lower portion of the roller in the opened state. The reinforcing fiber bundles 2t travels while repeating this state, and they are put into a state of the reinforcing-fiber opened yarns S just after the wind tunnel tube.

By adoption of this method, it is possible to process, with excellent productivity, the reinforcing fiber bundles 2t into the wide and thin reinforcing-fiber opened yarns S where the reinforcing fibers constituted thereof are dispersed. In the case of carbon fiber bundles in an untwisted state, it is possible to open the carbon fiber bundles at a processing speed of 5 m/minute or more with satisfactory dispersion of the reinforcing fibers so as to have about 2 to 7 times the width in a state of original yarn.

A plurality of reinforcing-fiber opened yarns S aligned in the width direction is vibrated in the width direction and are turned, by the width-direction-vibration provision mechanism provision mechanism 604, into an opened yarn sheet without any gap between the reinforcing-fiber opened yarns S, that is, the wide and thin reinforced fiber sheet material 2 in which the reinforcing fibers are dispersed.

On the other hand, the fabric supply mechanism 607 feeds out, from the supply roller, the fabric 3 previously produced so as to have a predetermined basis weight per unit area, and preliminary heats the fabric 3 with an unillustrated heater. The heating temperature is set so as to be higher than the melting temperature of the powder-shaped thermoplastic resin material for bonding 4 and to be lower than the melting temperature of the fabric 3. The powder-shaped thermoplastic resin material for bonding 4 is sprayed by a powder spraying device 8 on the surface of the heated fabric 3, the thermoplastic resin material for bonding 4 adheres to the surface of the fabric 3 and a part thereof is melted, with the result that temporary bonding is performed. It is also possible to heat the fabric 3 and to perform the temporary bonding after the thermoplastic resin material for bonding 4 is sprayed on the feed-out fabric 3.

Subsequently, after the fabric 3 passes through a reversing roller 11, the temporarily bonded one surface is stuck to one surface of the reinforced fiber sheet material 2, and the fabric 3 travels in close contact with a heating roller 9 of the heating mechanism 605. The heating temperature of the heating roller 9 is set so as to be higher than the melting temperature of the thermoplastic resin material for bonding 4 and to be lower than the melting temperature of the fabric 3, and the fabric 3 is put into a state of being bonded by the heating roller 9 with the thermoplastic resin material for bonding 4 to one surface of the reinforced fiber sheet material 2. Note that a mold release sheet material 7 is supplied from the mold-release-sheet-material supply mechanism 608, between the reinforced fiber sheet material 2 and the heating roller 9. Then, the fabric 3 travels through a cooling roller 10 of the cooling mechanism 606, and the thermoplastic resin reinforced sheet material 1 in which the fabric 3 is caused to adhere to the one surface of the reinforced fiber sheet material 2 is obtained. The obtained thermoplastic resin reinforced sheet material 1 is wound by the reinforced fiber sheet material winding mechanism 610 around a thermoplastic resin reinforced-sheet-material winding member 1b. In addition, the mold release sheet material 7 is wound by the mold-release-sheet-material winding mechanism 609.

As the adhesion method of the thermoplastic resin material for bonding 4, there can be used, in addition to a method for uniformly spraying, with the powder spraying device 8, a predetermined amount on the surface of the fabric 3 and discretely causing the powder-shaped thermoplastic resin material for bonding to adhere, through the use of the resin material, for example, a method for melting the thermoplastic resin material for bonding with a solvent or the like into a solution state, applying the solution to the surface of the fabric 3, volatilizing the solvent and causing the thermoplastic resin material for bonding to adhere to the surface of the reinforced fiber sheet material or the thermoplastic resin sheet material. Note that the thermoplastic resin material for bonding 4 is preferably caused to adhere to the sheet material so as to be discretely and uniformly distributed, and furthermore, the adhesion amount of thermoplastic resin material for bonding is set to be 1 g/m$^2$ to 10 g/m$^2$ per unit area of the fabric.

Although, in the example shown in Fig. 3A and 3B, a step of bonding the fabric is performed subsequent to the step of opening the reinforced fiber sheet material, it is possible to temporarily wind, around a roller or the like, the reinforced fiber sheet material obtained by the opening, to feed out, in the bonding step, the reinforced fiber sheet material from the winding roller, and to cause it to adhere to the fabric.

Example

A thermoplastic resin reinforced sheet material was manufactured through the use of the following materials.

<Materials used>

(Fiber bundle used for reinforcing fiber bundle)

Manufactured by Toray Industries, Inc.; T700SC-60E, a fiber diameter of about 7 μm, a number of fibers of 12000

(Fiber material used for fabric)

Manufactured by INDACHI Co. Ltd.; NYF20D-IFBR, a melting point of 220 to 240°C

(Resin used for thermoplastic resin material for bonding)

Manufactured by Toyo dyed Engineering Co., Ltd.; 8HS (polyamide-based resin powder), a melting point of 100°C.

<Manufacturing process>

(1) The same fabric as the knitted fabric 1 was knitted with a tricot knitting machine (manufactured by Karl Mayer Inc.) at a knitting density of 65 courses/inch through the use of the fiber material. In the obtained fabric, the width was 360 mm, the basis weight per unit area was about 18 g/m$^2$ and the pore volume rate was about 92.7%. The fabric was wound around the supply roller and was set in the fabric supply mechanism.
(2) While the fabric was fed out from the fabric supply mechanism and was made to travel, the fabric was heated with a heater to 120°C, the powder spraying device was used to discretely and uniformly cause the thermoplastic resin material for bonding to adhere to the surface of the fabric, and an amount of about 3.3 g/m$^2$ per unit area of the fabric was temporarily bonded.

(3) In the manufacturing process shown in Fig. 3A and 3B, twelve reinforced fiber bundles were set at intervals of 24 mm, with the multiple-fabric-bundle opening mechanism which air-opens multiple bundles simultaneously and the vertical-direction-vibration provision mechanism, each of the reinforcing fiber bundles was opened into the reinforcing-fiber opened yarn having a width of 24 mm, after that, the reinforcing-fiber opened yarns were vibrated with the width-direction-vibration provision mechanism provision mechanism in the width direction and the reinforced fiber sheet material without any gap between the reinforcing fiber opened yarns was obtained. In the obtained reinforced fiber sheet material, the width was 288 mm, and the basis weight per unit area of the fiber (the basis weight of the fiber per unit area) was about 33 $g/m^2$.

(4) As shown in Fig . 3A and 3B, the obtained reinforced fiber sheet material was transported so as to be overlaid on the fabric, the heating temperature of the heating roller was set to 120°C, the reinforced fiber sheet material was transported at a travel speed of about 10 m/minute while the temporarily bonded surface of the fabric was being brought into close contact with one surface of the reinforced fiber sheet material, with the result that the thermoplastic resin reinforced sheet material was manufactured.

<Evaluation>

In the obtained thermoplastic resin reinforced sheet material, first, the respective reinforcing fibers constituting the reinforced fiber sheet material were uniformly dispersed in a straight state. The fabric adhered to the entire surface of the reinforced fiber sheet material in a state of uniform bonding without unevenness of bonding, and thus the form of the reinforcing-fiber opened yarns was stabilized. Breaking and fiber bundling were not generated in the reinforced fiber sheet material. In addition, the obtained thermoplastic resin reinforced sheet material maintained its planar shape without generating a curl, had flexibility even when being subjected to bending deformation and had a restoring force for returning to its original planar state, with the result that its handling characteristics were excellent.

It is found that, in the case of molding a molded article through the use of the obtained thermoplastic resin reinforced sheet material as it is, its Vf value is 50%, whereas even in the case of a reinforced fiber sheet material formed so as to be thin and wide, a high Vf value can be set.

Reference Signs List

1: thermoplastic resin reinforced sheet material, 2: reinforced fiber sheet material, 3: fabric, 4: thermoplastic resin material for bonding, 7: mold release sheet material, 8: powder spraying device, 9: heating roller, 10: cooling roller, 11: reversing rollers: reinforcing-fiber opened yarn, 600: thermoplastic-resin-reinforced-sheet-material manufacturing device, 601: multiple-fabric-bundle supply mechanism, 602: multiple-fabric-bundle opening mechanism, 603: vertical-direction-vibration provision mechanism, 604: width-direction-vibration provision mechanism, 605: heating mechanism, 606: cooling mechanism, 607: fabric supply mechanism, 608: mold-release-sheet-material supply mechanism, 609: mold-release-sheet-material winding mechanism, 610: reinforced-sheet-material winding mechanism

**Claims**

1. A thermoplastic resin reinforced sheet material comprising:

   a reinforced fiber sheet material which is formed into a sheet shape by drawing and aligning a plurality of reinforcing fibers in a predetermined direction and whose weight per unit area is 80 $g/m^2$ or less;
   a fabric which is formed of a thermoplastic resin fiber material; and
   a thermoplastic resin material for bonding which is melted or softened at a temperature lower than a melting temperature of the fabric ;
   **characterised in that**
   the fabric has a fineness of 5.6 decitex to 84 decitex and whose basis weight per unit area is 5 $g/m^2$ to 90 $g/m^2$;
   the thermoplastic resin material discretely causes the reinforced fiber sheet material and the fabric to adhere; and
   the fabric has a pore volume rate of 50 % or more.

2. The thermoplastic resin reinforced sheet material according to claim 1 2,
   wherein the fabric is a knitted fabric.

3. The thermoplastic resin reinforced sheet material according to any of claims 1 or 2, wherein a cross-sectional thickness of the reinforced fiber sheet material is set to be within 10 times a diameter of the reinforcing fiber.

4. The thermoplastic resin reinforced sheet material according to any of claims 1 to 3, wherein an adhesion amount of the thermoplastic resin material for bonding is 1 g/m$^2$ to 10 g/m$^2$ per unit area of the fabric.

5. A thermoplastic resin multilayer reinforced sheet material, wherein the thermoplastic resin multilayer reinforced sheet material is formed and integrated by stacking a plurality of sheets of the thermoplastic resin reinforced sheet material according to any of claims 1 to 4.

6. The thermoplastic resin multilayer reinforced sheet material according to claim 5, wherein the thermoplastic resin reinforced sheet material is stacked such that each direction in which the reinforced fiber sheet material is drawn and aligned is multiaxial.

7. A method for manufacturing a thermoplastic resin reinforced sheet material, **characterised in that** the method comprises:

a temporary bonding step of heating a fabric which is formed of a thermoplastic resin fiber material having a fineness of 5.6 decitex to 84 decitex and whose weight per unit area is 5 g/m$^2$ to 90 g/m$^2$ and of discretely and temporarily bonding, to a surface of the fabric, a powder-shaped thermoplastic resin material for bonding which is melted or softened at a temperature lower than a melting temperature of the fabric; and
an adherence step of causing the reinforced fiber sheet material and the fabric to adhere by bringing a reinforced fiber sheet material formed into a sheet shape through drawing and aligning a plurality of reinforcing fibers in a predetermined direction, into contact with the fabric and by melting the thermoplastic resin material for bonding heated and temporarily bonded at the lower temperature than the melting temperature of the fabric; wherein the fabric has a pore volume rate of 50 % or more.

8. The method for manufacturing a thermoplastic resin reinforced sheet material according to claim 7, wherein, in the temporary bonding step, 1 g/m$^2$ to 10 g/m$^2$ of the thermoplastic resin material for bonding is caused to adhere per unit area of the fabric.

**Patentansprüche**

1. Durch ein thermoplastisches Harz verstärktes Folienmaterial, Folgendes beinhaltend:

verstärktes Faserfolienmaterial, gebildet zu einer Folienform durch Ziehen und Ausrichten einer Vielzahl von Verstärkungsfasern in einer vorbestimmten Richtung und dessen Gewicht pro Flächeneinheit 80 g/m$^2$ oder darunter beträgt;
einen Stoff, der aus einem thermoplastischen Harzfasermaterial gebildet ist; und
ein thermoplastisches Harzmaterial zum Verschmelzen, welches geschmolzen oder weich gemacht wird bei einer Temperatur, die unter einer Schmelztemperatur des Stoffs liegt;
**dadurch gekennzeichnet, dass**
der Stoff eine Feinheit von 5,6 Decitex bis 84 Decitex besitzt und dessen Grundgewicht pro Flächeneinheit 5 g/m$^2$ bis 90 g/m$^2$ beträgt;
das thermoplastische Harzmaterial jeweils einzeln das verstärkte Faserfolienmaterial und den Stoff zum Anhaften veranlasst; und
der Stoff eine Porenvolumenrate von 50 oder darüber besitzt.

2. Durch ein thermoplastisches Harz verstärktes Folienmaterial nach Anspruch 1, wobei der Stoff ein gestrickter Stoff ist.

3. Durch ein thermoplastisches Harz verstärktes Folienmaterial nach Anspruch 1 oder 2, bei welchem eine Querschnittsdicke des verstärkten Faserfolienmaterials so eingestellt ist, dass sie 10 Mal den Durchmesser der Verstärkungsfaser beträgt.

4. Durch ein thermoplastisches Harz verstärktes Folienmaterial nach einem der Ansprüche 1 bis 3,

bei welchem eine Haftmenge des thermoplastischen Harzmaterials zur Verschmelzung 1 g/m$^2$ bis 10 g/m$^2$ pro Flächeneinheit des Stoffs beträgt.

5. Durch ein thermoplastisches Harz verstärktes Mehrschicht-Folienmaterial, bei welchem das durch ein thermoplastisches Harz verstärkte Mehrschicht-Folienmaterial durch Stapeln einer Vielzahl von Folien aus dem durch ein thermoplastisches Harz verstärkten Folienmaterial nach einem der Ansprüche 1 bis 4 gebildet und integriert wird.

6. Durch ein thermoplastisches Harz verstärktes Mehrschicht-Folienmaterial nach Anspruch 5, bei welchem das durch ein thermoplastisches Harz verstärkte Folienmaterial in der Weise gestapelt wird, dass jede Richtung, in welche das verstärkte Faserfolienmaterial gezogen und ausgerichtet wird, multiaxial ist.

7. Verfahren zur Herstellung eines durch ein thermoplastisches Harz verstärkten Folienmaterials, **dadurch gekennzeichnet, dass** das Verfahren folgende Schritte beinhaltet:

    einen zeitweiligen Verschmelzungsschritt des Erhitzens eines Stoffs, der aus einem thermoplastischen Harzfasermaterial gebildet ist und eine Feinheit von 5,6 Decitex bis 84 Decitex besitzt und dessen Gewicht pro Flächeneinheit 5 g/m$^2$ bis 90 g/m$^2$ beträgt, und des jeweils einzelnen und zeitweiligen Verschmelzens, an einer Oberfläche des Stoffs, eines pulverförmigen thermoplastischen Harzmaterials zum Verschmelzen, welches bei einer Temperatur, die unter einer Schmelztemperatur des Stoffs liegt, geschmolzen oder weich gemacht wurde; und
    einen Schritt des Anhaftens, welcher das verstärkte Faserfolienmaterial und den Stoff zum Anhaften veranlasst, indem ein zu einer Folienform geformtes verstärktes Faserfolienmaterial durch Ziehen und Ausrichten einer Vielzahl von Verstärkungsfasern in einer vorbestimmten Richtung mit dem Stoff in Kontakt gebracht wird und durch Schmelzen des thermoplastischen Harzmaterials zum Verschmelzen, welches bei der Temperatur, welche geringer ist als die Schmelztemperatur des Stoffs, erhitzt und zeitweilig verschmolzen wurde; wobei der Stoff eine Porenvolumenrate von 50% oder darüber besitzt.

8. Verfahren zur Herstellung eines durch ein thermoplastisches Harz verstärkten Folienmaterials nach Anspruch 7, bei welchem, in dem zeitweiligen Verschmelzungsschritt, 1 g/m$^2$ bis 10 g/m$^2$ des thermoplastischen Harzmaterials zum Verschmelzen dazu veranlasst wird, pro Gewichtseinheit des Stoffs anzuhaften.

## Revendications

1. Matériau de feuille renforcé en résine thermoplastique comprenant :

    un matériau de feuille renforcé par fibres qui est formé selon une forme de feuille en étirant et en alignant une pluralité de fibres de renforcement dans une direction prédéterminée et dont un poids par aire unitaire est de 80 g/m$^2$ ou moins ;
    un tissu qui est formé en un matériau de fibres en résine thermoplastique ; et
    un matériau de résine thermoplastique pour la liaison qui est fondu ou ramolli à une température inférieure à une température de fusion du tissu,
    **caractérisé en ce que** :

    le tissu présente une finesse de 5,6 décitex à 84 décitex et son poids de base par aire unitaire est de 5 g/m$^2$ à 90 g/m$^2$ ;
    le matériau de résine thermoplastique force de manière discrète le matériau de feuille renforcé par fibres et le tissu à adhérer ; et
    le tissu présente un taux en volume de pores de 50 % ou plus.

2. Matériau de feuille renforcé en résine thermoplastique selon la revendication 1, dans lequel :

    le tissu est un tissu tricoté.

3. Matériau de feuille renforcé en résine thermoplastique selon l'une quelconque des revendications 1 ou 2, dans lequel :

    une épaisseur en coupe transversale du matériau de feuille renforcé par fibres est réglée de manière à être à l'intérieur de 10 fois un diamètre de la fibre de renforcement.

**4.** Matériau de feuille renforcé en résine thermoplastique selon l'une quelconque des revendications 1 à 3, dans lequel :

un taux d'adhérence du matériau de résine thermoplastique pour la liaison est de 1 g/m$^2$ à 10 g/m$^2$ par aire unitaire du tissu.

**5.** Matériau de feuille renforcé multicouche en résine thermoplastique, dans lequel :

le matériau de feuille renforcé multicouche en résine thermoplastique est formé et intégré en empilant une pluralité de feuilles du matériau de feuille renforcé en résine thermoplastique selon l'une quelconque des revendications 1 à 4.

**6.** Matériau de feuille renforcé multicouche en résine thermoplastique selon la revendication 5, dans lequel :

le matériau de feuille renforcé en résine thermoplastique est empilé de telle sorte que chaque direction dans laquelle le matériau de feuille renforcé par fibres est étiré et aligné soit multiaxiale.

**7.** Procédé de fabrication d'un matériau de feuille renforcé en résine thermoplastique, **caractérisé en ce que** le procédé comprend :

une étape de liaison temporaire consistant à chauffer un tissu qui est formé en un matériau de fibres en résine thermoplastique qui présente une finesse de 5,6 décitex à 84 décitex et dont le poids par aire unitaire est de 5 g/m$^2$ à 90 g/m$^2$ et à lier de manière discrète et de façon temporaire, sur une surface du tissu, un matériau de résine thermoplastique sous forme de poudre pour la liaison qui est fondu ou ramolli à une température inférieure à une température de fusion du tissu ; et
une étape d'adhérence consistant à forcer le matériau de feuille renforcé par fibres et le tissu à adhérer en amenant un matériau de feuille renforcé par fibres, qui est formé selon une forme de feuille par l'intermédiaire d'un étirage et d'un alignement d'une pluralité de fibres de renforcement dans une direction prédéterminée, en contact avec le tissu et en fondant le matériau de résine thermoplastique pour la liaison qui est chauffé et lié de façon temporaire à la température inférieure à la température de fusion du tissu ; dans lequel :
le tissu présente un taux en volume de pores de 50 % ou plus.

**8.** Procédé de fabrication d'un matériau de feuille renforcé en résine thermoplastique selon la revendication 7, dans lequel :

au niveau de l'étape de liaison temporaire, 1 g/m$^2$ à 10 g/m$^2$ du matériau de résine thermoplastique pour la liaison est/sont forcé(s) à adhérer par aire unitaire du tissu.

FIG. 1

FIG. 2

## FIG. 3A

## FIG. 3B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6322160 A
- JP 2008221833 A
- US 2010215887 A
- US 5520995 A
- JP 2007518890 W